(19) Europäisches Patentamt
European Patent Office
Office européen des brevets

(11) **EP 1 780 878 A1**

(12) **EUROPEAN PATENT APPLICATION**

(43) Date of publication:
**02.05.2007 Bulletin 2007/18**

(51) Int Cl.:
*H02K 41/03* (2006.01)

(21) Application number: **05447240.2**

(22) Date of filing: **25.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Protronic N.V.**
**8900 Ieper (BE)**

(72) Inventors:
• **Krebs, Guillaume**
 **59650 Villeneuve d'Ascq (FR)**

• **Pauwels, Brecht**
 **9800 Deinze (BE)**
• **Piriou, Francis**
 **59800 Lille (FR)**
• **Tounzi, Abdelmounaïm**
 **59110 La Madeleine (FR)**
• **Willemot, Dirk**
 **8930 Rekkem (BE)**

(74) Representative: **Bird, William Edward et al**
 **Bird Goen & Co.,**
 **Klein Dalenstraat 42A**
 **3020 Winksele (BE)**

(54) **Compact linear and rotary actuator**

(57) An actuator and a method of operating the actuator are described, the actuator having two independent degrees of freedom, with a first element that is rotatable about an axis and/or moveable along the axis, the range of motion defining a cylinder or cylindrical section. Optionally, a bearing allows the first element to move axially and rotationally. The first element has an array of integrated permanent magnets and a support for the magnets. Equal numbers of oppositely-polarized permanent magnets are arranged in the first element such that each magnet penetrates through the complete thickness of the support. Other than the bearings, the thickness of the first element in the radial direction is no greater than the thickness of the magnets which it includes.

A controller is provided for supplying drive signals to the coils so that all the coils are driven all of the time to provide axial or rotary movement of the first element or a combination of the two. The exciting currents are multiphase alternating currents. The phase and current supplied to one each coil is also supplied to a further coil placed diametrically opposite to the one coil, to thereby provide balanced symmetrical loadings on the first element.

Fig. 1

EP 1 780 878 A1

**Description**

TECHNICAL FIELD

The present invention relates to such devices that have two degrees of freedom (sometimes referred to as four degrees if movements in opposite directions are classified as separate degrees of freedom), i.e. can selectively and either independently or in combination rotate and/or move an element linearly along an axis of rotation. More particularly, the present invention relates to devices known variously as linear-rotary actuators, linear-rotary motors, as well as methods of operating the same and to their use in traversing machines, positioning devices, robots, weaving and knitting machines, etc.

BACKGROUND OF THE INVENTION

Various kinds of electromagnetic linear/rotary actuators are known that provide multiple degrees of freedom. Ideally, electromagnetic linear/rotary actuators should provide low weight for a given load-carrying capacity. In applications requiring high dynamics, the motor itself creates a large part of the inertia of the moving system. Ideally, such actuators should be compact in size. This requires an optimum use of magnetic and mechanical components. Further, such actuators should provide smooth operation free of cogging forces. Finally, such actuators should ideally be cost-effective and have high accuracy.

Achieving all these requirements has proven difficult. Some known designs use different sets of coils for axial motion and rotational motion. This is wasteful in space and materials. Other known designs do not use a near 100% packing of permanent magnets and/or coils. Further, some known designs, use magnetic circuits which are not optimally short, e.g. the magnetic circuit includes magnetic keepers or supports which increase the weight and reduces the compactness. Some designs have to use air bearings which increase the complexity and cost as well as maintenance, e.g. in dusty environments.

It is generally known from for example EP 0 875 982 to stack a rotary and a linear motor to thereby realise independent rotational and axial movement. Such systems suffer from the addition of a significant amount of mass of the movable parts and an increase of the volume and the inertia of the structural unit. Additionally each stacked drive element requires separate bearings and their associated coupling is subjected to wear. Known rotary and linear motors have the disadvantage that the magnetic system is not used optimally, in other words some magnetic materials are only used for the linear movement while other magnetic materials and other coils are only used for the rotary movement.

SUMMARY OF THE INVENTION

There is a need in the field for linear-rotary actuators that provide at least one of high dynamics, in other words high accelerations and maximum force, high accuracy, large load-carrying capacity, compact size, smooth operation, and cost-effectiveness.

It is an object of the present invention to provide a linear-rotary actuator and a method of operating and manufacturing the same that is light in weight and has high dynamics. An advantage of the present invention is that the magnetic materials and/or coils are used more optimally, e.g. are used for the linear as well as for the rotary movement. A further advantage of the present invention is that loads on bearings are reduced. Yet a further advantage of the present invention is that the drive currents for the phases of the actuator are less complex. Another advantage of the present invention can be that the actuator is simple in design and construction. Another advantage of the present invention is that the actuator is compact. Yet another advantage of the present invention is that the actuator is cost-effective to manufacture and maintain.

The present invention provides an actuator, with two independent degrees of freedom, with a first element that is rotatable about an axis and/or moveable along the axis, the range of motion defining a cylinder or cylindrical section. A second element is provided that is stationary with respect to the first element and is located concentrically within the first element. Optionally, a bearing allows the first element to move axially and rotationally with respect to the second element. The first element has an array of integrated permanent magnets and a support for the magnets, e.g. a cage body. Equal numbers of oppositely-polarized permanent magnets are arranged in the first element such that each magnet penetrates through the complete thickness of the support. In particular the first element has a cylindrical part which holds the magnets. In particular, the cylindrical part extends substantially as far as the magnets extend, i.e. the cylindrical part is coextensive with the magnets. The magnets penetrate through the cylindrical part, i.e. to thereby expose the pole surfaces of the magnets. Outside the cylindrical part for holding the magnets, other structures can be provided, e.g. bearings or a functional element such as an arm. The thickness of the cylindrical part of the first element in the radial direction is not greater than the thickness of the magnets which it includes. As high accelerations and maximum force are desired, the actuator according to the invention can be implemented with use of maximal active magnetic surface and minimal weight of moving parts, i.e. maximum energetic density.

For example, the magnets are arranged in a regular pattern at, or nearly at 100% tiling thereby forming rings and columns of magnets. The magnets are at or nearly at 100% tiling since only a small or minimal space is provided between the magnets. Each ring or column is formed from alternating polarity magnets. The coils are arranged in a regular pattern at or nearly at 100% tiling and can thereby form rings and columns of coils. For each coil a further coil is placed diametrically opposite. The periodicity of the magnets differs from the periodicity of the coils in both the axial and tangential directions.

The first element is arranged concentrically within the second element to allow the first and second elements to rotate about an axis relative to each other and to allow the first element to slide in a direction collinear with the axis, the coils being positioned relative to each other and relative to the magnets such as to produce a substantial motive force capable of both rotating and displacing the first and second elements with respect to each other when the coils are excited by an electrical current. The second element can comprise anti-cogging elements located concentrically within the first element.

A controller is provided for supplying drive signals to the coils so that all the coils are driven all of the time to provide axial or rotary movement of the first element or a combination of the two movements. The exciting currents are preferably multiphase alternating currents. The exciting currents are applied to provide balanced symmetric loading on the first element. For example, the phase and amplitude of a current supplied to one each coil is also supplied to a further coil placed diametrically opposite to the one coil, to thereby provide balanced symmetrical loadings on the first element. If there is not an even number of coils or if the coils are not placed diametrically opposite, it is also possible to supply suitable currents to thereby provide a balanced symmetric loading on the first element. For example, if corresponding coils are placed at 120° along the circumference of the elements, it is possible by exciting similar currents to three corresponding coils to obtain a balanced symmetric loading on the first element.

The present invention also provides a method of operating a linear and rotary actuator comprising a first cylindrical element that is rotatable about an axis and/or moveable along the axis, the range of motion defining a cylinder or cylindrical section, the first element having a set of permanent magnets and a first support for the magnets and a second element having a set of coils arranged concentrically and cylindrically with respect to the set of magnets and the axis, the method comprising supplying drive signals to the coils so that all the coils are driven all of the time to provide axial or rotary movement of the first element or a combination of the two movements. The coil exciting currents can be multiphase alternating currents. The exciting currents are preferably applied to provide balanced symmetric loading on the first element. The phase and amplitude of a current supplied to one coil is preferably the same as supplied to a further coil, preferably placed diametrically opposite to the one coil. If there is not an even number of coils or if the coils are not placed diametrically opposite, it is also possible to supply suitable currents to thereby provide a balanced symmetric loading on the first element. For example, if corresponding coils are placed at 120° along the circumference of the elements, it is possible by exciting similar currents to three corresponding coils to obtain a balanced symmetric loading on the first element.

The coils are preferably excited in cells of m x n coils where n and m are integers and may be equal, a phase and amplitude of the current supplied to one coil located in a position in a first cell is also supplied to any further coil placed in the same position in any other cell.

The drive signals excite the coils such as to produce a substantial motive force capable of both rotating and linearly displacing the first and second elements with respect to each other, either together or independently. In one embodiment the drive signals are supplied to all the coils all of the time to provide axial or rotary movement of the first element or a combination of the two movements. The coil exciting currents can be multiphase alternating currents. A phase and amplitude of a current supplied to one coil can also be supplied to a further coil, preferably placed diametrically opposite to the one coil. This modular design is cost-effective, needs only one type of coils and is advantageous in assembly and maintenance.

The above, and other objects, features and advantages of the present invention will become apparent from the following description read in conjunction with the accompanying drawings, in which like reference numerals designate the same elements.

BRIEF DESCRIPTION OF THE DRAWINGS

FIG. 1 is a longitudinal cross-section of a rotary-linear actuator, according to an embodiment of the invention.
FIG. 2 is a transverse cross-section of the rotary-linear actuator of FIG. 1.
FIG. 3 is an exploded view of the rotary-linear actuator of FIG. 1.
FIG. 4 is a longitudinal cross-section of a rotary-linear actuator, according to another embodiment of the invention.
FIG. 5 shows an arrangement of coils and magnets in accordance with an embodiment of the present invention.

FIG. 6 shows a detail of the linear-rotary actuator of Fig. 1.

FIG. 7 shows a detail of a linear rotary actuator in polar coordinates.

FIGS. 8 to 10 show flux variations in the coils of the linear-actuator having an arrangement as in Fig. 5 for three different motions.

FIG. 11 shows an exploded view of a rotary-linear actuator, according to another embodiment of the invention.

FIG. 12 shows a longitudinally transverse cross-section of the rotary-linear actuator of FIG. 11.

FIG. 13 shows a transverse cross-section of the rotary-linear actuator of FIG. 11.

FIG. 14 shows an arrangement of magnets used in embodiments of the present invention.

FIG. 15 shows an alternative arrangement of magnets used in embodiments of the present invention.

FIG. 16 shows an actuator according to the present invention in an application.

## DETAILED DESCRIPTION OF THE ILLUSTRATIVE EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

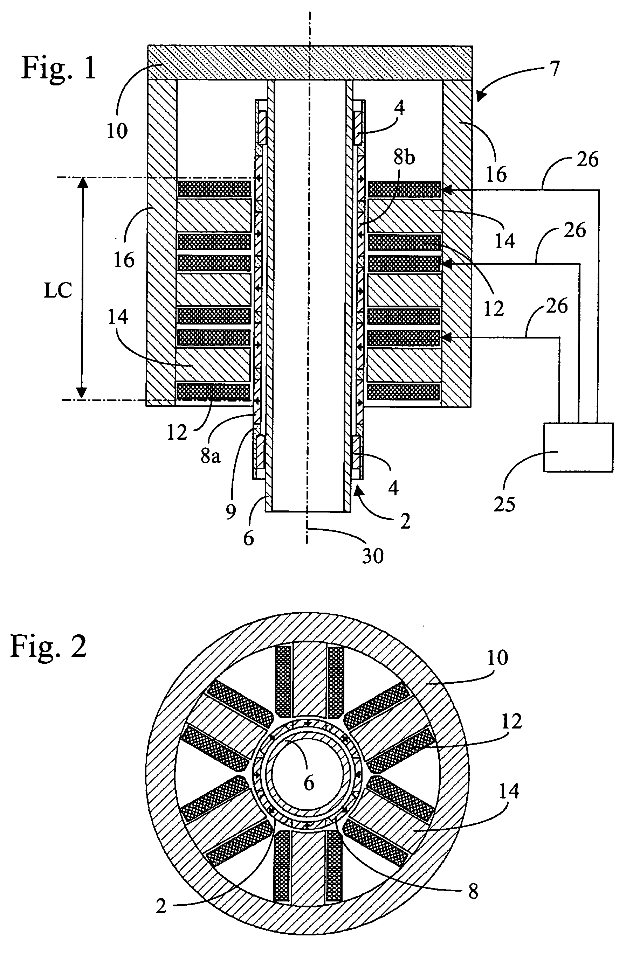

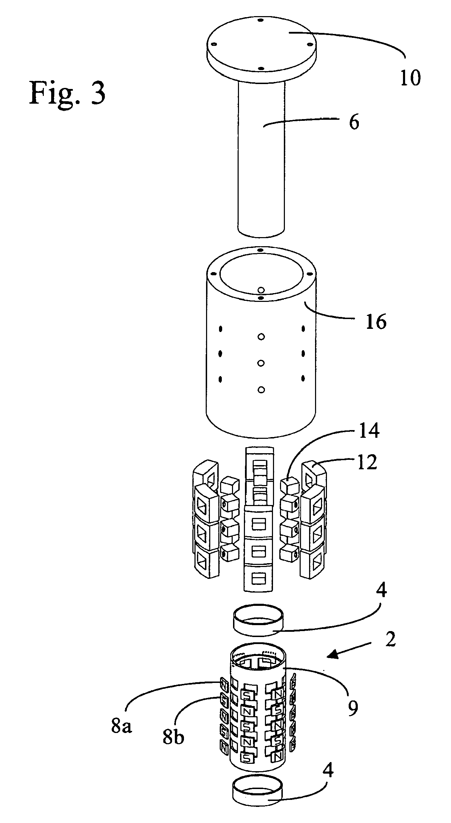

The invention concerns an electromagnetic system known as actuator, motor, positioning system, etc. with a generally tubular construction capable of producing independent rotational and axial movement. As high accelerations and maximum force are desired the actuator according to the present invention can be implemented with use of maximal active magnetic surface and minimal weight of moving parts, i.e. maximum energetic density. An embodiment of the present invention is shown schematically in Figs. 1, 2 and 3. The actuator is a brushless EC device (electronically commutated device). It comprises a cylindrical, axially moveable rotor element 2 that is supported by bearings 4 on a support 6. Support 6 is fixed to or integral with the housing 10 of the actuator. The element 2 may be attached to a stage, to members or arms or to any other device depending on the application at a position remote from the location where the support 6 is attached to the housing. The bearings 4 may be air bearings but the present invention is not limited thereto. As the loads are low on the bearings 4 in accordance with the present invention due the drive currents to the phases of the motor being symmetrical, the complexity of the bearings can be reduced. Preferably, low maintenance bearings are preferred, e.g. simple sliding bearings can be sufficient, e.g. low weight, low friction dry bearings may be used, for instance made of Teflon™. However, any other suitable bearings may be used with the present invention, e.g. ball bearings or roller bearings or magnetic bearings. The element 2 is free to move axially and to rotate about its axis 30 while being supported on bearings 4. Accordingly, compact bearings can be used and there is only a small air gap between the inner surface of the element 2, i.e. the surfaces of magnets 8, more particularly magnets 8a and 8b, and the outer surface of the support 6. This allows a compact and efficient magnetic circuit.

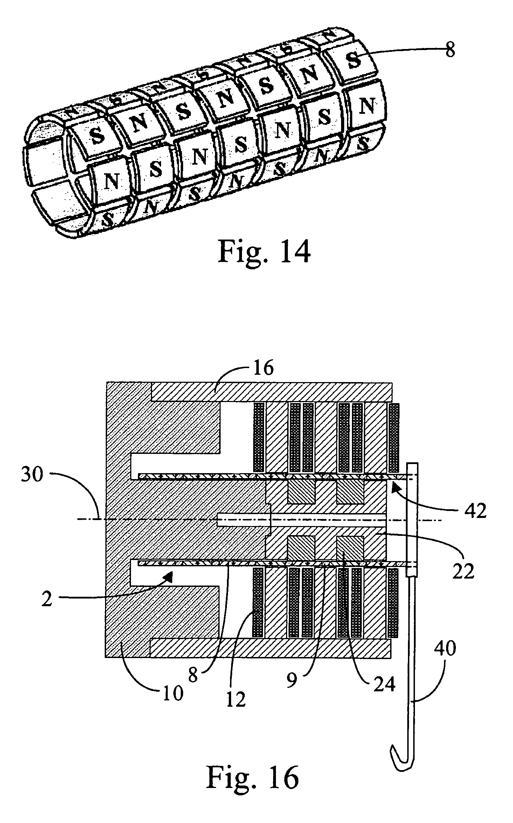

The axially moveable rotor element 2 comprises an array of permanent magnets 8 included into a cage body 9 of this element 2. The magnets may be high performance permanent magnets, e.g. of the rare-earth type. Half of magnets 8a are oriented so that their one pole, e.g. a north pole, points radially outwards and an equal number of magnets 8b are oriented so that their one pole, e.g. north pole, points radially inwards. The magnets 8a which have their one pole pointed radially outwards are located adjacent to magnets 8b having the one pole pointing radially inwards in both the circumferential and axial directions. In a Cartesian array this results in a chequerboard pattern of the poles. The magnets 8a and 8b can be arranged in a regular pattern, e.g. to form circumferential rings and axial columns of magnets although this is not essential. However, there are no rings or columns of one polarity - instead, if columns and rows are present, the polarities preferably alternate in both rings and columns as shown best in Fig. 14. The cage body 9 of the rotor element 2 comprises non-magnetic, more preferably insulating material, e.g. a plastic, etc. The cage body 9 may be made of porous or foamed material to reduce weight or e.g. made of plastic, a composite material such as fibres and a resin such as epoxy resin. A non-magnetic metal such as aluminium (although useable) is less preferred. The cage body 9 may be in the form of a cage into which the magnets 8 are fitted. Alternatively the cage is formed of a material which attaches one magnet to the neighbour, e.g. an adhesive. The magnets 8 penetrate completely through the thickness of cage body 9. The thickness of the assembled element 2 is not thicker than the thickness of the magnets 8, except at positions used for bearings. The thickness of the cage body 9 may be less than or equal to the thickness of the magnets 8. Accordingly, the ends of the magnets 8 are either flush with the outer surface of the cage body 9 or extend beyond it. Also surfaces of the magnets 8 directed radially outwards are exposed. This can reduce the air gap between the magnets 8 and the drive coils 12 resulting in a compact magnetic circuit. Also surfaces of the magnets 8 directed radially inwards can be exposed. The thickness of the cage body 9 is less which reduces the weight of the element 2, in other words allows an increase in its dynamic behaviour.

A set of coils 12, which are all driven to provide for both axial and radial movements, are located around the axially moveable rotor element 2 in an array which extends both circumferentially and axially. The coils 12 are arranged in an array which is cylindrically concentric with the magnet array. The coils 12 can be manufactured by winding the coils in a standard manner, e.g. using lacquered copper wires or copper wires surrounded by a potting resin. The coils 12 may include an inner magnetic core 14, e.g. made of a low hysteresis or soft magnetic material such as can be fabricated from soft magnetic metal powder. For example, a powder iron, held together with glue or a resin such as epoxy or by sintering, may be used. The core 14 may be made of laminated strips of material, e.g. the laminations can be manufactured from thin sheets of steel laminated together or from compacted powdered iron. The magnetic core is sometimes known as a tooth.

The coils 12 are fixed to a stator 16 that is part of a second element 7 of the actuator. The stator 16 may be made of a magnetic and optionally insulating or conductive material, preferably a low hysteresis or soft magnetic material, e.g. made of soft iron powder. The coils 12 when energised from a power source, e.g. a controller, with currents having specific phase relationships to each other, as described later, create a force on the magnets 8 which can be axial and/or tangential, i.e. to provide axial or circumferential rotational movement or a combination of the two. Alternating currents applied to the coils 12 by a controller generate changing magnetic fields that interact with the magnetic fields of the permanent magnets 8. Hence, the element 2 can be driven to execute rotational and/or linear movements. Accordingly, there are not two sets of coils - one for axial movements and one for rotational movement - but rather a single set of coils which is used for both movements. This optimises the use of the coils, lowers the weight of the actuator and makes it more compact, less complex to assemble or repair, and more modular.

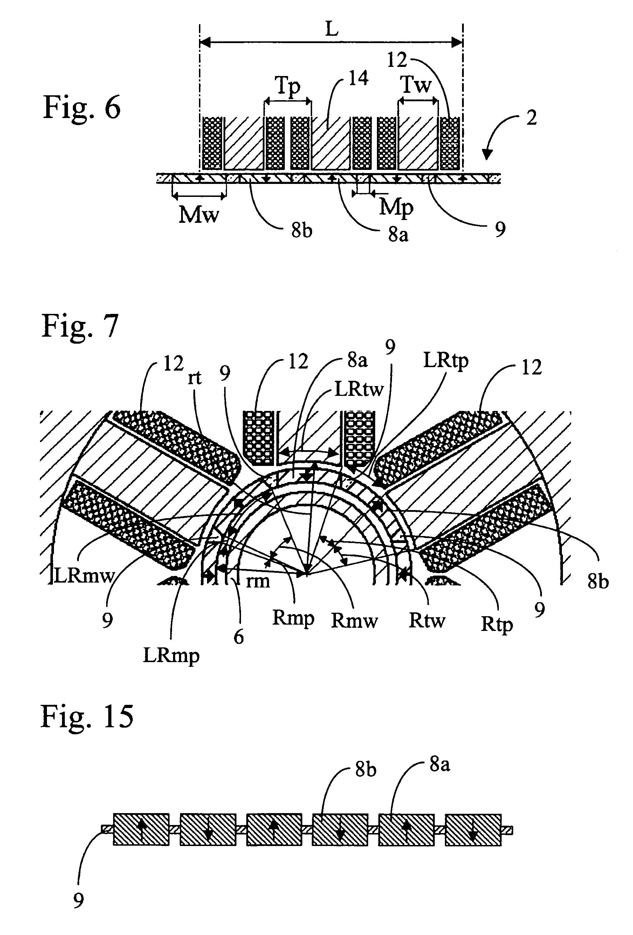

Generally, use can be made of a configuration with at least one module or cell with "m x n" coils 12, in an example m in the direction of rotational motion and n in the axial direction. One can arrange K number of cells with m x n coils 12 in circumferential direction, and arrange L number of cells with m x n coils 12 in axial direction. In this way, in circumferential direction a number of K*m coils is provided per ring of coils. For a three phase rotational system the number m will be three and a number of K*3 coils is provided per ring of coils. So if, as in figure 1 two cells are arranged in circumferential direction for a three phase rotational system, there are 2*3=6 coils per ring. For a four phase rotational system, the number m will be four and K*4 coils are provided per ring of coils. Accordingly in the axial direction there are L*n coils per column of coils. For a three phase linear system the number n will be three. So there will be, per column of coils, a number of L*3 of coils. So if, as in figure 1, one cell is arranged in the axial direction for a three phase linear system, there will be 1*3=3 coils per column. In the example of figure 1 and 6, such a cell will have a length of LC as indicated in figure 1 and 6. In this example one cell of coils contains nine coils 12 and can cooperate with sixteen magnets 8.

An embodiment of the present invention includes, for a rotational movement, when there are m coils 12 per cell, there are then at least m+1 corresponding magnets 8 per cell. A distance or size of m coils will correspond to a distance or size of (m+1) magnets. In the axial direction, when there are n coils 12 per cell, there will be at least n+1 corresponding magnets 8 per cell. Also the distance or size of n coils will correspond to a distance of (n+1) magnets. For the example of figure 1, where two cells of a three phase rotational system are present, which corresponds to K*m = 2*3 = 6 coils per ring of coils 12, there are at least K*(m+1)= 2*(3+1)= 8 magnets per ring of magnets 8. It is clear that each ring extends over 360 degrees or over 2*pi radians. Similarly, for one cell of a three phase linear system which corresponds to L*n = 1*3 = 3 coils per column of coils 12, there will be at least L*(n+1)= 1*(3+1)= 4 magnets per column of magnets 8.

For the distances or sizes as mentioned above, the following formulas characterise the system and comprise m, n, K, L as parameter.

For a rotational system, m coils per cell correspond to at least m+1 magnets

$$\Rightarrow m*(Rtw+Rtp) = (m+1)*(Rmw+Rmp)$$
$$\Rightarrow (Rmw+Rmp)/(Rtw+Rtp)= m/(m+1)$$

For a three phase rotational system as in figure 2 or 7, where m=3,

$$\Rightarrow (Rmw+Rmp)/(Rtw+Rtp)= 3/(3+1)= 0,75$$

If there are K cells for the rotational system:

$$\Rightarrow K*m*(Rtw+Rtp) = K*(m+1)*(Rmw+Rmp)=2*pi$$
$$\Rightarrow Rtw+Rtp=(2*pi)/(K*m)$$
$$\Rightarrow Rmw+Rmp= (2*pi) / (K*(m+1))$$

For a three phase rotational system with two cells as in figure 2 or 7, where m=3 and K=2,

⇨ Rtw+Rtp= (2*pi) / (2*3) = pi/3 = 60°
⇨ LRtw+LRtp= rt * (Rtw+Rtp) = rt * pi/3
⇨ Rmw+Rmp= (2*pi)/(2*(3+1)) = pi/4 = 45°
⇨ LRmw+LRmp = rm * (Rmw+Rmp) = rm * pi/4

For the linear system, n coils per cell correspond to at least n+1 magnets

⇨ n*(Tw+Tp) = (n+1)*(Mw+Mp)
⇨ (Mw+Mp)/(Tw+Tp)= n/(n+1)

For a three phase linear system as in figure 1 or 6, where n=3,

⇨ (Mw+Mp)/(Tw+Tp)= 3/(3+1)= 0,75

If there are L cells for the linear system:

⇨ L*n*(Tw+Tp) = K*(n+1)*(Mw+Mp) = LC
⇨ Tw+Tp=LC/(L*n)
⇨ Mw+Mp=LC/(L*(n+l))

For a three phase linear system with one cell as in figure 1 or 6, where n=3 and L=1,

⇨ Tw+Tp=LC/(1*3)=L/3
⇨ Mw+Mp= LC/(1*(3+1)) = L/4

In order to reduce cogging forces and to obtain a sinusoidal flux shape, for a 3x3 phase system with linear and rotational movement, following relations are chosen for example:

$$\frac{Tw}{(Tw + Tp)} = 0,45 \text{ and } \frac{Mw}{(Mw + Mp)} = 0,8,$$

For this sytem, the same values are valid for Rtw/Rtp and Rmw/Rmp because m=n=3. A sinusoidal flux shape is preferred. A sinusoidal flux shape offers the advantage that it can easily be processed.

The number of magnets 8 and coils 12 may be provided in a density and size that can be selected based on the intended application. Many more or fewer magnets 8 can be used depending on the resolution and size and power of the device required for the application. The number of magnets 8 per ring of magnets is preferably a multiple of an integer, e.g. a multiple of three. The circumferential periodicity of the magnets 8 is different from the circumferential periodicity of the coils 12. Also the axial periodicity of the magnets 8 and the coils 12 is different. Although circumferentially six coils are shown in Fig. 2, other numbers of coils are possible. Similarly, although axially three coils are shown in Fig. 1, other numbers of coils are possible. In a preferred embodiment the number of coils in the circumferential direction is a multiple of an integer, e.g. three and the number of coils in the axial direction is a multiple of an integer, e.g. three.

Suitable means may be provided (not shown) for limiting travel of the axially moveable element 2 in the axial direction and these means may include limit switches.

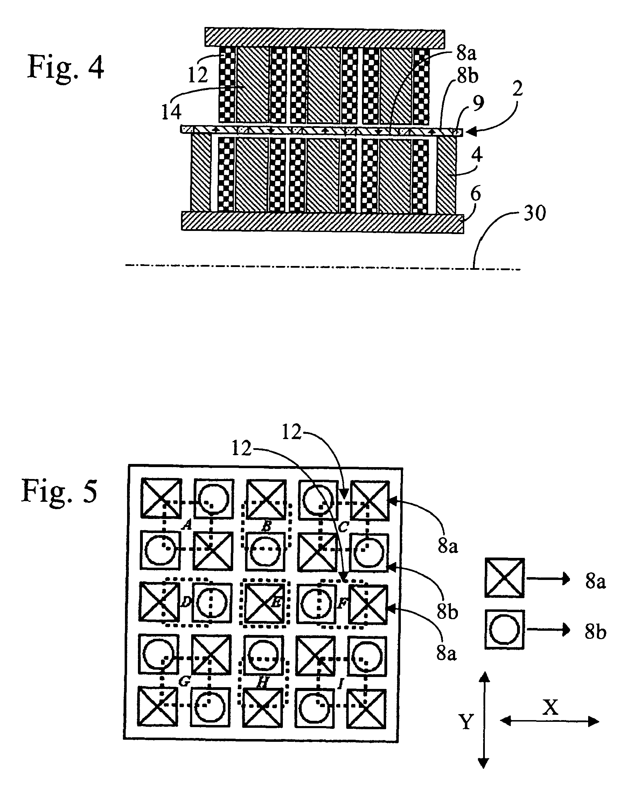

Referring to Fig. 4 according to another embodiment of the present invention two sets of coils 12a, 12b are located on either side of the axially moveable rotor element 2. The position of the coils 12a, 12b is shown with respect to the axis 30 of rotation of the element 2.

Operation of any of the linear-rotary actuators described above will be described with reference to Figs. 5 to 10. An arrangement of magnets 8 and coils 12 is shown schematically in Fig. 5 whereby the actually curved arrangement of coils and magnets is shown flattened out into a plane for clarity purposes. As can be seen from Fig. 5, the periodicity of the magnets 8 differs from that of the coils 12 in both the axial ("Y") direction and the circumferential ("X") direction. In the example shown the coil spacing is smaller than magnet spacing. The coils 12 have also been indicated with characters A to I in Fig. 5. The relationship between these spacings for one embodiment of the present invention for a three phase linear system is shown schematically in Fig. 6. If the distance across the magnetic cores 14 is TW, the distance across adjacent wires of two adjacent coils is TP, the width of each magnets 8 is MW and width of the cage elements separating the magnets 8 is MP then the following holds:

$$n*(Tw+Tp) = (n+1)*(Mw+Mp)$$

$$3*(Tw+Tp) = (3+1)*(Mw+Mp)$$

$$3*Tw + 3*Tp = 4*Mp+4*Mw$$

This formula is for the axial direction, i.e. for a flat array. For the circumferential direction, a similar formula should be given in polar coordinates for a cylindrical rotor, and can be as follows for a three phase rotational system.

$$m*(Rtw+Rtp) = (m+1)*(Rmw+Rmp)$$

$$3*(Rtw+Rtp) = (3+1)*(Rmw+Rmp)$$

$$3*Rtw + 3*Rtp = 4*Rmw + 4*Rmp$$

In the discussion below only periodicities of this kind will be discussed in detail. However, alternative periodicities of the coils and magnets can be used in accordance with the present invention.

When appropriate alternating currents flow through the coils 12, forces will be induced on the magnets 8. The direction of these forces will depend on the relative phases of the currents and the positions of the magnets. In accordance with an aspect of the present invention all the coils 12 are driven with multiphase alternating currents at the same time or at least all the coils 12 that are located within the area of the magnets 8 projected onto the coils 12 are driven at the same time. In this way the full active area of the coil array is used. As shown in Fig. 5 the coils 12 will be described with reference to a "m x n" cell where m is three and n is three and this cell having nine coils A to I, comprising three rows A to C, D to F and G to I. The coils of the present invention may be driven in tiled cells that need not be 3 x 3 but may be any m x n arrays of coils with associated arrays of magnets, whereby the coils are driven by multi-phase alternating currents, more particularly 3-phase alternating current for the example of 3 x 3 coils for a cell. For a "m x n" coil cell it is preferred if the total number of coils around the circumference is an integer times m and/or an integer times n. Then if a coil in one cell is driven with an alternating current with a certain phase and a certain amplitude, the coil in the cell diametrically opposite the driven coil is also driven with the same phase and amplitude. In this way the coils are driven in a symmetrical manner which reduces unbalanced radial load on the element 2 to a minimum or zero.

Returning to the 3 x 3 cells of Fig. 5 as an example of how to drive the coils in accordance with embodiments of the present invention, a controller is adapted to supply multiphase alternating currents to the coils A to I such as to generate magnetic fluxes defined by the following relationships:

Flux B: $u.[\cos(ax).\cos(by+2\pi/3)]$
Flux E: $u.[\cos(ax).\cos(by)]$
Flux H: $u.[\cos(ax).\cos(by-2\pi/3)]$

Flux A: $u.[\cos(ax-2\pi/3).\cos(by+2\pi/3)]$
Flux D: $u.[\cos(ax-2\pi/3).\cos(by)]$
Flux G: $u.[\cos(ax-2\pi/3).\cos(by-2\pi/3)]$

Flux C: $u.[\cos(ax+2\pi/3).\cos(by+2\pi/3)]$
Flux F: $u.[\cos(ax+2\pi/3).\cos(by)]$
Flux I: $u.[\cos(ax+2\pi/3).\cos(by-2\pi/3)]$

Where Flux A is the flux generated by coil A, etc., x and y are the distances along the X and Y axes with respect to some arbitrary origin, u is a constant factor related to the number of turns and the characteristics of the materials used in the manufacture of the actuator, and the constants a and b take into accounts the geometrical dimensions, and magnet and coil pitch.

If a specific motion is to be achieved, e.g. rotation, combined axial and rotary movement or axial movement alone, the values of x and y will be a function of the time "t". For example, motion along the X axis is defined by the distance x being a function of, e.g. proportional to time t. Substituting the respective time functions into the above equations for x and y, defines how the flux of each coil will vary with time. The currents necessary to generate this flux are then applied to the coils A to I by the controller. The currents will follow the same time characteristic as the flux, i.e. determined by the cos*cos functions given above. The different phases between the currents and hence between the fluxes induce a force on the magnets 8 which results in a force on the axially moveable rotor element 2 in the axial direction and/or a torque in the rotational direction.

All the coils 12 of the actuator are driven as described above at the same time, the coils 12 in the same position in each 3 x 3 cell of coils receiving the same alternating current. Accordingly, all the coils 12 are driven symmetrically when viewed across a diameter of the actuator. The effect of this is that the radial load on the element 2 is balanced or very nearly so thus reducing the load on the bearings 4.

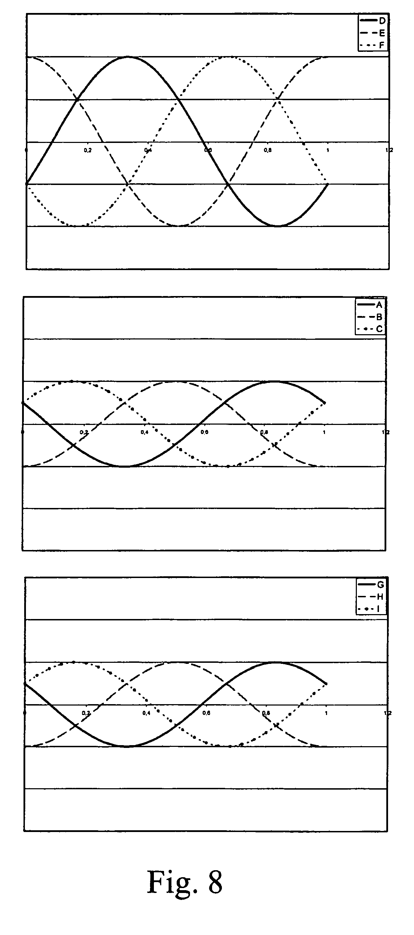

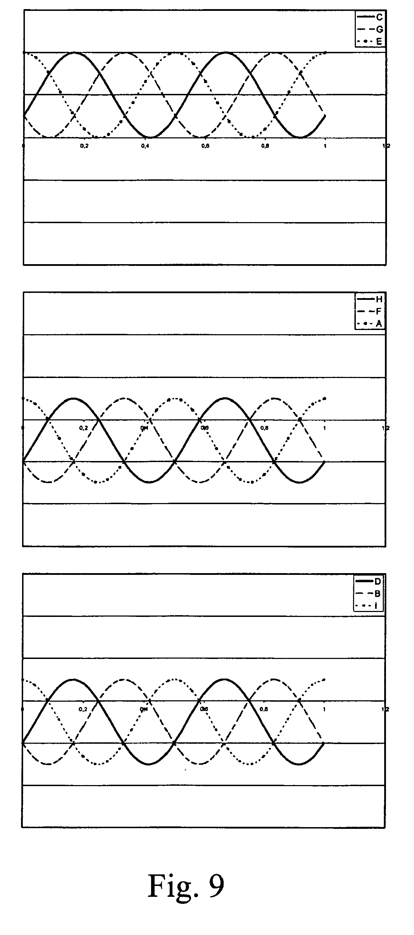

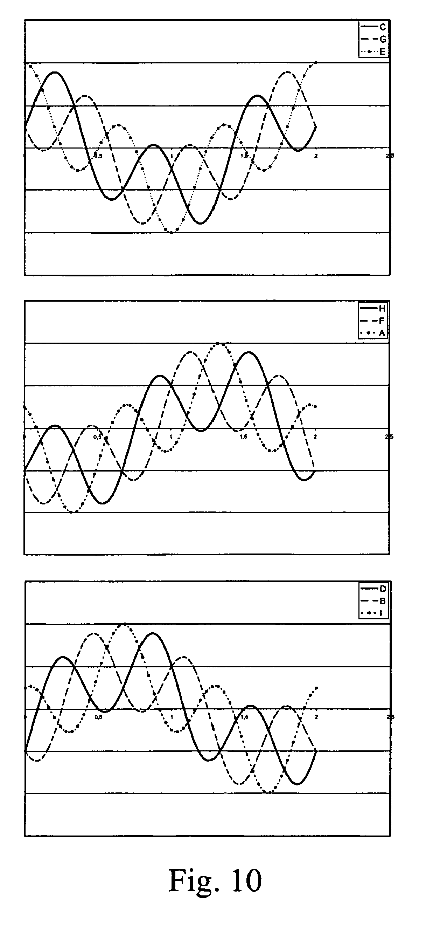

Specific examples of the fluxes generated by the coils 12, as indicated in Fig. 5 with A to I, are shown in Figs. 8 to 10. Figure 8 shows the fluxes generated when the motion is purely in the X direction, i.e. rotation only or y(t) = 0. As shown the phases of the flux for each one coil of the triplets of coils D-F, A-B, G-I are different and the amplitude can differs. Each triplet can be driven by a three phase current whereby absolute phase can be different for the different coils. Fig. 9 shows similar curves for a motion or equal rotation and axial movement, i.e. x(t)/y(t) = 1. Finally, Fig. 10 shows the fluxes in the various coils when a motion x(t)/y(t) = 2. The flux for other directions can be determined as outlined above.

As shown in Fig. 1, the currents in the coils 12 are supplied from a controller 25. The controller 25 can be in the form of a microcontroller. The controller 25 may include a processing engine such as a microprocessor or a programmable digital logic device such as a programmable fate array, especially a Field Programmable gate array. The microcontroller may be provide with memory, e.g. solid state memory. The required currents for the coils may be determined from cosine functions stored for example in look up tables. Such a controller 25 can comprise drive devices for generating drive signals to be supplied to the coils 8, such as coil exciting currents 26 for obtaining flux variations in a coil 12, where these currents 26 can be generated at specific times and have a specific frequency and amplitude. Further the controller 25 comprises switching means that are arranged between the drive devices and the coils 12 to conduct the generated currents to the coils 12 that have to be excited. In order to obtain a movement of the actuator, currents 26 can be fed to the corresponding coils 12 according to an algorithm or program, e.g. a stored program such as a computer program or software. Preferably, a controller 25 for an actuator according to the invention is an open loop controller, this means that no feedback signals are necessary. An open loop controller is advantageous if a combined rotary and linear movement is to carried out according to an algorithm or program. In this way, the controller 25 can control the movement according to a specific program in order that rotary as well as linear movements occur at the same time. Alternately, the program can be such that first a small linear movement takes place and thereafter possibly a small rotary movement, whereby several small movements as well in linear direction as in rotary direction follow one after the other as programmed in order to obtain the expected movement. Other designs of a controller are possible, as controllers with a closed loop system or feedback control systems. Although a feedback control system is not necessary for controlling an actuator according to the invention, the use of a controller with a feedback system is not excluded. An open loop control system offers the advantage that the movement control can be programmed more easily.

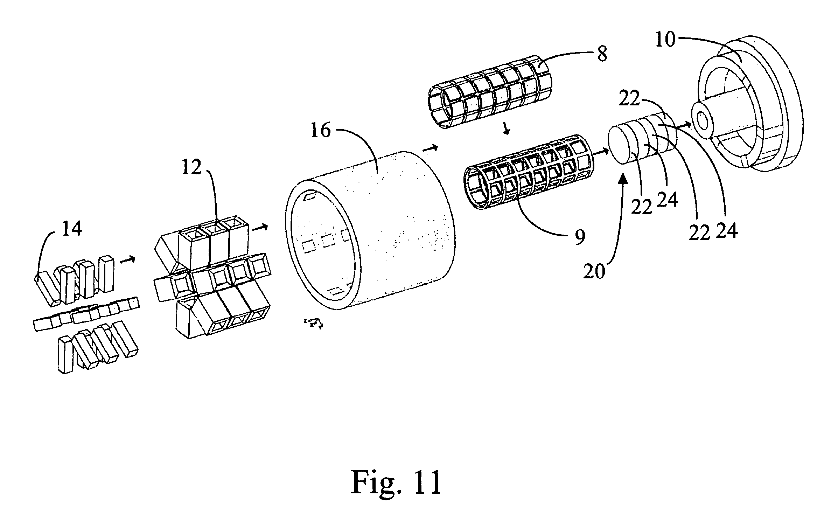

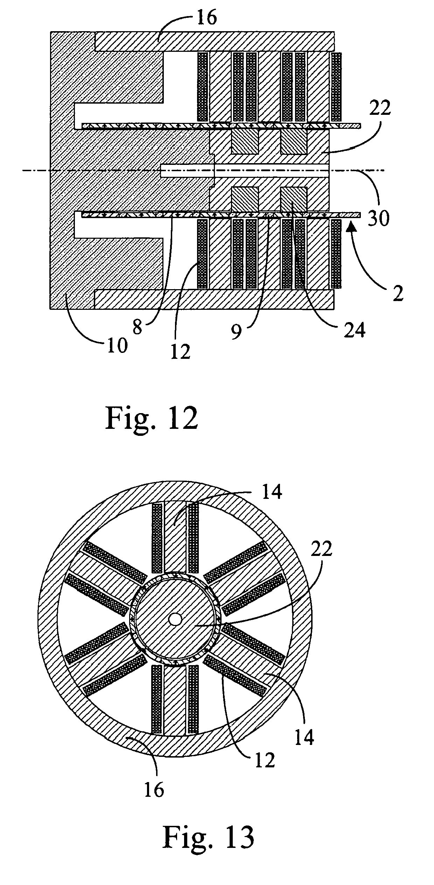

An alternative embodiment of the present invention is shown in Figs. 11 to 13. Fig. 11 shows an exploded view and Figs 12 and 13 show an axial cross-section and a transverse cross-section, respectively. The items with the same reference numbers refer to the same items as described above and can be made from the same materials. In particular the magnets penetrate completely through a cage which supports the magnets and the thickness of the cage is less than or equal to the thickness of the magnets. The thickness of the assembled element 2 is not thicker than the thickness of the magnets 8, such that the magnets penetrate through the complete thickness of the element 2. A difference with respect to previous embodiments is the use of anti-cogging elements 20 as part of the support 6. The purpose of the anti-cogging elements 20 is to reduce the effect of the discrete arrays of magnets and cores 14 which causes the motion of the element 2 to be irregular. The anti-cogging elements 20 comprise magnetic parts 22 separated by insulating parts 24 in a cylindrical array which is aligned with the magnets 8. That is when the support 2 is in its final position the magnetic parts of the anti-cogging element 20 are aligned with the magnets 8. The anti-cogging elements remain stationary and act as magnetic flux returns. The insulating parts 24 may be used as bearings if they are made of low-friction material and project slightly pore towards the magnets 8 of the element 2 than the magnetic parts 22.

Referring to Fig. 14 and 15, the actuators described with reference to all the figures 1 to 13 have magnets (and coils) in Cartesian arrays with 100% or nearly 100% packing density whereby the magnets are square or are arranged in a square tile. The thickness of the assembled element 2 is not thicker than the thickness of the magnets 8 and the magnets 8 are provided in a cage body 9 having a thickness less than the thickness of the magnets 8. In this embodiment also the magnets 8 penetrate through the complete thickness of the element 2.

In accordance with the present invention the magnets 8 and the coils 12 can have an almost 100% tiling. In an alternative the magnets 8 will be arranged next to one another and can be glued to one another. In this example the glue between the magnets 8 forms the cage body 9 for the magnets. Similarly to Fig. 14, the magnets can be arranged in an array with polygonal symmetry and next to one another, such that there is practically no space between the magnets.

For example, the magnet array of Fig. 14 has a quadratic or square tiling and there is a magnet in the centre or at the corner of each square. Such a square tiling offers the advantage that it is possible to use flux shapes that are sinusoidal and that the drive devices for such flux shapes are not complex. Other arrangements are possible. For example, the shape of the magnets could be different, e.g. round or polygonal. Alternatively, magnets and coils can be arranged in other patterns such a hexagonal pattern. Also in the any other polygonally tiled array according to the present invention, the tiling can be 100%. Also for all the possible arrangements of the magnets and coils in 100% tilings, all of the coils can be driven by alternating currents at the same time. Also for any of the tiling designs according to the present invention, preferably for any one coil there can be a further coil placed diametrically opposite across the axis of movement and the one and the further coil can be driven by alternating currents having the same phase and amplitude.

The cage body 9 can also be part of or included within a supporting body, whereby next to the cage body 9 the supporting body comprises a supporting part having a particular shape at the height of the bearings 4 for supporting the cage body. In this way, the cage body 9 for the magnets 8 can be shaped according to the invention, while supporting part can have totally different shape that is suitable for working together with bearings.

In an application of the actuator according to the invention the first element 2 can be used to drive another element, such as a part of a robot, a part of a textile machine or any other element. In the example of Fig 16, the first element 2 drives an arm 40 of a tucking-in device for a weaving machine. As known from EP 322.014 B1 or BE 1004137, such an arm 40 has to carry out a linear and a rotational movement for tucking-in a weft thread in a shed of a weaving machine. The arm 40 driven by the first element 2 is attached or fixed to the first element 2, e.g. by means of glue, by means of bolts or by any other fixation means at a position 42, e.g. at the exposed end of the first element 2. According to an alternative the arm 40 may be formed in one piece with the first element 2, in particular may be formed in one piece with the cage body 9 of the element 2. The first element 2 has a cylindrical part, e.g. a cage body 9, for holding the magnets and there are also structures outside this cylindrical part such as the bearings and the arm 40 which can be larger in diameter than the cylindrical part. The magnets 8 penetrate through the cylindrical part, e.g. the cage body 9, and the bearings or any functional element such as arm 40 is located away from the cylindrical part of the first element 2.

Although in the embodiments described, the axially moveable rotor element 2 has permanent magnets 8 and is internally arranged within the coils 12 and stator 16, the present invention can also be implemented by placing the coils 12 on the element 2 and the permanent magnets 8 on the outside as a stator.

Those skilled in the art will readily appreciate that many modifications are possible in the exemplary embodiment (s) without materially departing from the novel teachings and advantages of this invention. Accordingly, all such modifications are intended to be included within the scope of this invention as defined in the appended claims.

**Claims**

1. A linear and rotary actuator comprising a first cylindrical element (2) that is rotatable about an axis (30) and/or moveable along the axis (30), the range of motion defining a cylinder or cylindrical section, the first element (2) having a set of permanent magnets (8) and a cylindrical part (9) for holding the magnets, each magnet penetrating through the complete thickness of the cylindrical part (9), and a second element (7) having a set of coils (12) arranged concentrically and cylindrically with respect to the set of magnets (8) and the axis (30).

2. The actuator according to claim 1, wherein equal numbers of oppositely-polarized permanent magnets (8) are arranged in the first element (2).

3. The actuator according to claim 1 or 2, further comprising a second element (7) that is stationary with respect to the first element (2) and wherein a bearing (4) allows the first element (2) to move axially and rotationally with respect to the second element (7).

4. The actuator according to claim 3, wherein in the cylindrical part (9) of the first element the thickness of the first element (2) in the radial direction is not greater than the thickness of the magnets (8) which it includes.

5. The actuator according to any previous claim wherein the magnets (8) are arranged in a regular pattern substantially at 100% tiling.

6. The actuator according to claim 5, wherein the magnets (8) are arranged in rings and columns, each ring or column being formed from magnets (8) of alternating polarity.

7. The actuator according to any previous claim, wherein the coils (12) are arranged in a regular pattern substantially at 100% tiling.

8. The actuator according to claim 7, wherein the coils (12) are arranged rings and columns, for each coil (12) a further coil (12) is arranged diametrically opposite thereto.

9. The actuator according to any previous claim, wherein the periodicity of the magnets (8) differs from the periodicity of the coils (12) in both the axial and tangential directions.

10. The actuator according to any previous claim, wherein the first element (2) is arranged concentrically within the second element (7) to allow the first and second elements to rotate about the axis (30) relative to each other and to allow the first element (2) to slide in a direction collinear with the axis (30), the coils (12) being positioned relative to each other and relative to the magnets (8) such as to produce a substantial motive force capable of both rotating and displacing the first and second elements with respect to each other when the coils (12) are excited by an electrical current.

11. The actuator according to any previous claim, further comprising a controller (25) for supplying drive signals to the coils (12) so that all the coils are driven all of the time to provide axial or rotary movement of the first element (2) or a combination of the two movements.

12. The actuator according to claim 11, wherein the controller (25) is adapted to supply coil exciting currents (26) that are multiphase alternating currents.

13. The actuator according to claim 12, wherein the phase and amplitude of a current supplied to one coil (12) is also supplied to a further coil (12) placed diametrically opposite to the one coil (12).

14. The actuator according to any of the claims 3 to 13, wherein the second element (7) comprises anti-cogging elements (20) located concentrically with respect to the first element (2).

15. A method of operating a linear and rotary actuator comprising a first cylindrical element (2) that is rotatable about an axis (30) and/or moveable along the axis (30), the range of motion defining a cylinder or cylindrical section, the first element (2) having a set of permanent magnets (8) and a cylindrical part (9) for the magnets (8) and a second element (7) having a set of coils (12) arranged concentrically and cylindrically with respect to the set of magnets (8) and the axis (30), the method comprising supplying drive signals to the coils (12) so that all the coils (12) are driven all of the time to provide axial or rotary movement of the first element (2) or a combination of the two movements.

16. The method according to claim 15, the coil exciting currents (26) are multiphase alternating currents.

17. The method actuator according to claim 15, wherein the phase and amplitude of a current supplied to one coil (12) are the same as supplied to a further coil (12) placed diametrically opposite to the one coil (12).

18. The method according to claim 16 or 17, wherein the coils (12) are excited in cells of m x n coils (12), a phase and amplitude of the current supplied to one coil (12) located in a position in a first cell of coils (8) is also supplied to any further coil (12) placed in the same position in any other cell of coils (8).

19. The method according to any of claims 15 to 18, wherein the drive signals (26) excite the coils (12) such as to produce a substantial motive force capable of both rotating and displacing the first and second elements with respect to each other.

20. The method according to claim 19, wherein the drive signals are supplied to all the coils (12) all of the time to provide axial or rotary movement of the first element (2) or a combination of the two movements.

21. The method according to claim 20, wherein the coil exciting currents (26) are multiphase alternating currents.

**22.** The method according to claim 21, wherein a phase and amplitude of a current supplied to one coil (12) is also supplied to a further coil (12) placed diametrically opposite to the one coil (12).

Fig. 1

Fig. 2

Fig. 3

Fig. 4

Fig. 5

Fig. 6

Fig. 7

Fig. 15

Fig. 8

Fig. 9

Fig. 10

Fig. 11

EP 1 780 878 A1

Fig. 12

Fig. 13

Fig. 14

Fig. 16

**European Patent Office**

**EUROPEAN SEARCH REPORT**

Application Number

EP 05 44 7240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN<br>vol. 2003, no. 12,<br>5 December 2003 (2003-12-05)<br>-& JP 2004 040894 A (TSUBAKIMOTO CHAIN CO), 5 February 2004 (2004-02-05)<br>* abstract *<br>* figures 1-4 *<br>----- | 1-22 | H02K41/03 |
| A | PATENT ABSTRACTS OF JAPAN<br>vol. 2003, no. 12,<br>5 December 2003 (2003-12-05)<br>-& JP 2003 309964 A (DAIKIN IND LTD),<br>31 October 2003 (2003-10-31)<br>* abstract *<br>* figures 3,7 *<br>----- | 1-22 | |
| A | US 6 455 956 B1 (SOGARD MICHAEL R)<br>24 September 2002 (2002-09-24)<br>* figures 1A,1B *<br>* column 5, line 6 - line 8 *<br>* column 11, line 44 - line 53 *<br>----- | 1,5 | |
| A | US 6 208 045 B1 (HAZELTON ANDREW J ET AL)<br>27 March 2001 (2001-03-27)<br><br>* figures 1A,1B,1C *<br>* column 5, line 14 - line 16 *<br>* column 6, line 2 - line 6 *<br>* column 7, line 50 - column 9, line 11 *<br>----- | 1,9,11,<br>12,15,<br>20,21 | TECHNICAL FIELDS SEARCHED (IPC)<br><br>H02K |
| A | US 6 543 355 B1 (STIEL JUERGEN ALFRED)<br>8 April 2003 (2003-04-08)<br>* figure 1 *<br>* column 1, line 38 - line 40 *<br>* column 2, line 20 - line 29 *<br>* column 2, line 34 - line 35 *<br>* column 2, line 56 - line 64 *<br>----- | 1 | |

-/--

The present search report has been drawn up for all claims

| Place of search | Date of completion of the search | Examiner |
|---|---|---|
| The Hague | 21 December 2005 | Le Chenadec, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 05 44 7240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATENT ABSTRACTS OF JAPAN vol. 2003, no. 12, 5 December 2003 (2003-12-05) -& JP 2004 343903 A (MEIDENSHA CORP), 2 December 2004 (2004-12-02) * abstract * * figure 1 * ----- | 1 | |
| A | US 6 407 471 B1 (MIYAMOTO YASUHIRO ET AL) 18 June 2002 (2002-06-18) * figure 4 * * column 5, line 19 - line 48 * ----- | 14 | |

TECHNICAL FIELDS
SEARCHED      (IPC)

The present search report has been drawn up for all claims

| Place of search | Date of completion of the search | Examiner |
|---|---|---|
| The Hague | 21 December 2005 | Le Chenadec, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 44 7240

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2005

| Patent document cited in search report | | Publication date | Patent family member(s) | | Publication date |
|---|---|---|---|---|---|
| JP 2004040894 | A | 05-02-2004 | NONE | | |
| JP 2003309964 | A | 31-10-2003 | NONE | | |
| US 6455956 | B1 | 24-09-2002 | EP | 1124310 A2 | 16-08-2001 |
| | | | JP | 2000316270 A | 14-11-2000 |
| | | | US | 6127749 A | 03-10-2000 |
| US 6208045 | B1 | 27-03-2001 | NONE | | |
| US 6543355 | B1 | 08-04-2003 | WO | 9955533 A2 | 04-11-1999 |
| | | | EP | 1082225 A2 | 14-03-2001 |
| | | | JP | 3430154 B2 | 28-07-2003 |
| | | | JP | 2002512910 T | 08-05-2002 |
| JP 2004343903 | A | 02-12-2004 | NONE | | |
| US 6407471 | B1 | 18-06-2002 | JP | 3700915 B2 | 28-09-2005 |
| | | | JP | 2000037070 A | 02-02-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0875982 A
- EP 322014 B1
- BE 1004137